# FASCICULE DE BREVET EUROPEEN

(11) **EP 1 343 238 B1**
(45) Date de publication et mention de la délivrance du brevet: **05.07.2017**
(21) Numéro de dépôt: 03290557.2
(22) Date de dépôt: 07.03.2003
(51) Int. Cl.: H02G 3/10

(54) **Boîtier pour appareillage électrique à fixation souple**
Dose für elektrisches Gerät mit biegsamer Befestigung
Box for electrical apparatus comprising flexible fasteners

(30) Priorité: 07.03.2002 FR 0202893
(43) Date de publication de la demande: 10.09.2003
(73) Titulaire: Legrand France, 87000 Limoges (FR); Legrand SNC, 87000 Limoges (FR)
(72) Inventeur: Adam, Damien, 72240 Domfront en Champagne (FR)
(74) Mandataire: Santarelli

(56) Documents cités:
- EP-A- 0 840 418
- EP-A- 1 096 630
- EP-A- 1 156 568
- FR-A- 1 058 517

## Description

La présente invention concerne d'une manière générale les boîtiers pour appareillages électriques et, en particulier, un boîtier comprenant un fond pourvu de trous de forme allongée selon une direction X pour la fixation dudit boîtier à une paroi.

Il peut s'agir d'un boîtier de sortie d'une installation encastrée ou d'un boîtier à rapporter le long d'une goulotte de cheminement de câbles ou de conducteurs électriques.

Il peut également s'agir d'un boîtier à poser en saillie sur une paroi, alimenté par des câbles, avec ou sans conduit, également posés en saillie sur la paroi. Le document "EP 1 096 630 A" divulgue une goulotte (12) pour appareillage électrique comprenant une face avant (10) pourvu d'au moins un trou (51) pour la fixation dudit appareillage électrique à la goulotte, ledit trou (51) appartenant à un plot (50) rattaché à la face avant (10) par une liaison souple (52) autorisant un léger décalage dudit trou (51) parallèlement au plan (P) de la face avant (10) par rapport à une position d'origine stable. Généralement, les trous du boîtier présentent une forme oblongue.

On connaît notamment des documents EP 0 508 175 et FR 2 809 543 des boîtiers du type précité.

Bien que les trous oblongs autorisent un ajustement du boîtier au moment de sa fixation à la paroi de manière à placer en correspondance les trous oblongs avec les trous de perçage prévus dans la paroi, il arrive que le défaut de positionnement du trou de perçage prévu dans la paroi par rapport au trou oblong prévu dans le fond du boîtier soit trop important pour être pris en compte par ce trou oblong.

Ceci arrive d'autant plus souvent que, en général, les fonds des boîtiers comportent au moins quatre trous, et il est donc suggéré d'effectuer quatre trous de perçage correspondants dans la paroi sur laquelle doit être rapporté le boîtier.

Pour remédier à l'inconvénient précité, la présente invention propose un nouveau boîtier comprenant un fond pourvu d'au moins un trou de forme allongée selon une direction X pour la fixation dudit boîtier à une paroi, caractérisé en ce que ledit trou appartient à un plot rattaché audit fond par une liaison souple autorisant un léger décalage dudit trou parallèlement au plan du fond selon une direction Y perpendiculaire à la direction X par rapport à une position d'origine stable.

Ainsi, avantageusement, selon l'invention, la liaison souple rattachant le plot portant le trou au fond dudit boîtier autorise un léger décentrement dudit trou permettant d'ajuster sa position dans une direction transversale à sa direction d'allongement à celle du trou de perçage réalisé dans la paroi recevant le boîtier.

D'autres caractéristiques non limitatives et avantageuses du boîtier pour appareillage électrique selon l'invention sont les suivantes :
- ledit décalage de chaque trou est réalisé par pivotement de la liaison souple dans le plan du fond ;
- chaque plot pourvu d'un trou s'étend librement dans une ouverture prévue dans ledit fond, en étant rattaché par ladite liaison souple à un bord de ladite ouverture ;
- pour chaque plot, il est prévu une paroi mince qui s'étend à partir d'un bord de ladite ouverture opposé à celui auquel est rattaché ledit plot par ladite liaison souple, en dessous dudit plot de façon à obturer une partie de ladite ouverture, cette paroi mince présentant un bord libre découpé de telle sorte que lorsque ledit plot est décalé par rapport à sa position d'origine stable il prend appui sur ladite paroi mince pour la plaquer contre la paroi de fixation du boîtier ;
- chaque plot porte, de part et d'autre de ladite liaison souple, des butées aptes à venir en appui contre une partie dudit fond pour plaquer ledit fond contre la paroi ;
- chaque plot vient de formation avec ladite liaison souple associée ;
- chaque liaison souple est constituée par une languette flexible qui s'étend selon ladite direction X de chaque trou, perpendiculairement à un bord dudit fond ;
- chaque languette flexible vient de formation par moulage d'une matière plastique avec ledit fond ; et
- chaque trou présente une forme oblongue.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique de dessus d'une platine formant le fond d'un boîtier pour appareillage électrique selon l'invention ;
- la figure 2 est une vue schématique en coupe selon le plan B-B, réalisée au niveau d'un trou, de la platine de la figure 1 ;
- la figure 3 est une vue schématique en perspective de trois quarts de la platine de la figure 1 ;
- les figures 4A à 4C représentent schématiquement, vu de face, trois positions différentes d'un trou d'une variante de la platine de la figure 1 ; et
- les figures 5A à 5C représentent schématiquement, vu de face, trois positions différentes d'un trou de la platine de la figure 1.

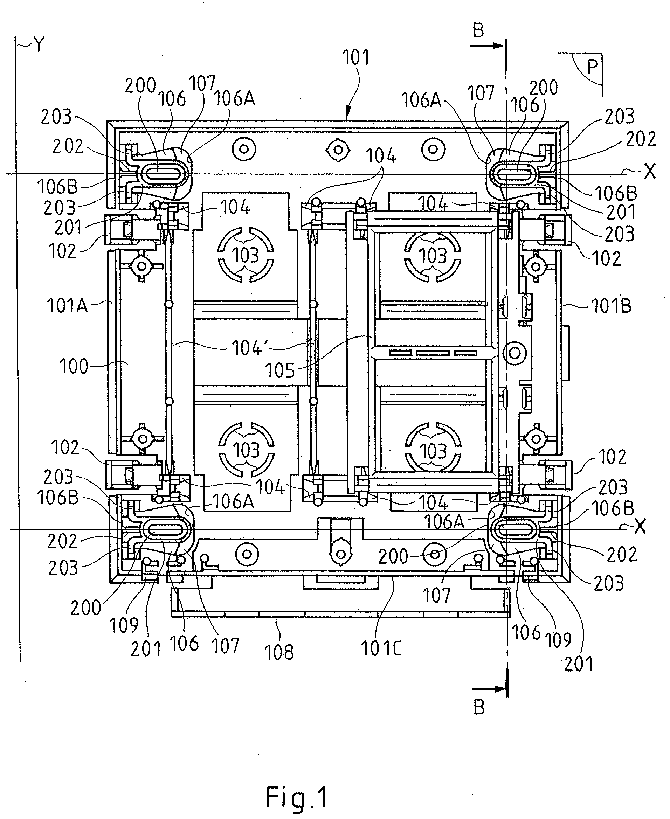

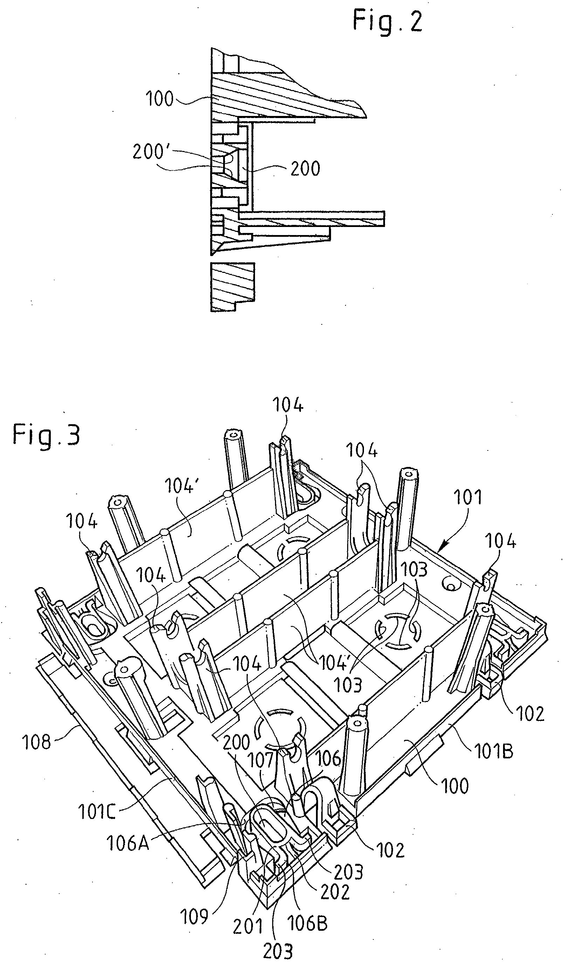

Sur les figures 1 et 3, on a représenté une platine 100 formant le fond d'un boîtier pour appareillage électrique.

Cette platine 100, bien connue par elle-même, ne sera pas décrite ici dans le détail.

Pour l'essentiel, elle présente ici une forme carrée et est destinée à recevoir un capot de fermeture (non représenté) dont le bord périphérique s'adapte au bord périphérique 101 de ladite platine 100.

Elle comporte, sur deux bords 101A, 101B parallèles, des clips 102 destinés à l'encliquetage du capot de fermeture.

Cette platine 100 est destinée à être rapportée sur une paroi (non représentée), en sortie d'une installation électrique encastrée ou le long d'une goulotte de cheminement de câbles ou de conducteurs électriques.

La platine 100 représentée sur les figures 1 et 3 porte en saillie des colonnes 104 aux sommets desquelles sont destinés à être montés, par exemple par encliquetage, des supports d'appareillages électriques 105.

Les colonnes 104 sont reliées deux à deux par des cloisons 104' s'élevant perpendiculairement à ladite platine. Ces cloisons 104' définissent entre elles des logements pour les appareillages électriques montés sur les supports d'appareillages électriques 105 encliquetés sur les sommets des colonnes 104.

La platine 100 comporte, au droit de chaque logement pour un appareillage électrique, des prédécoupes 103 disposées en cercle.

Lorsque cette platine 100 est destinée à être montée en sortie d'une installation électrique encastrée, les prédécoupes 103 sont cassées par l'installateur de manière à créer des ouvertures d'entrée de conducteurs ou câbles électriques à l'intérieur du boîtier en vue de leur raccordement aux appareillages électriques concernés montés sur les supports d'appareillages électriques 105.

En outre, sur un autre bord 101C de la platine 100 (perpendiculaire aux bords 101A, 101B), il est prévu des agencements 108, 109 pour le montage d'un auvent pour le raccordement de l'intérieur du boîtier à l'intérieur d'un socle de goulotte, lorsque ladite platine est positionnée le long d'une goulotte.

Ces agencements comprennent, d'une part, une plate-forme 108 s'étendant dans le plan P de la platine 100 en saillie dudit bord 101C et, d'autre part, deux colonnes 109 s'élevant perpendiculairement au plan P de la platine 100, disposées de part et d'autre de ladite plate-forme 108 et comportant une ouverture longitudinale formant un moyen de rainure pour la mise en place de l'auvent non représenté.

Avantageusement, la platine formant le fond 100 du boîtier comporte au moins un trou, ici quatre trous 200, pour la fixation du boîtier à une paroi.

Chaque trou 200 est positionné à proximité d'un coin de la platine 100. Chaque trou 200 présente une forme allongée selon une direction X. Ces trous 200 sont disposés deux à deux selon une même ligne de sorte qu'ils s'étendent l'un vers l'autre selon la direction X. Ils présentent ici, plus particulièrement, une forme oblongue.

Comme le montre plus particulièrement la figure 2, vu en coupe transversale, chaque trou 200 de la platine 100 présente une section qui se rétrécit du fait que sa paroi périphérique 200' présente un profil en entonnoir débouchant sur une section transversale cylindrique correspondant au diamètre du fût de l'organe de fixation du boîtier venant s'ancrer dans ladite paroi en traversant ledit trou 200.

Le profil en entonnoir de la paroi périphérique 200' de chaque trou 200 permet de faciliter l'engagement de chaque organe de fixation à l'intérieur de chaque trou pour la fixation de la platine 100 à la paroi correspondante.

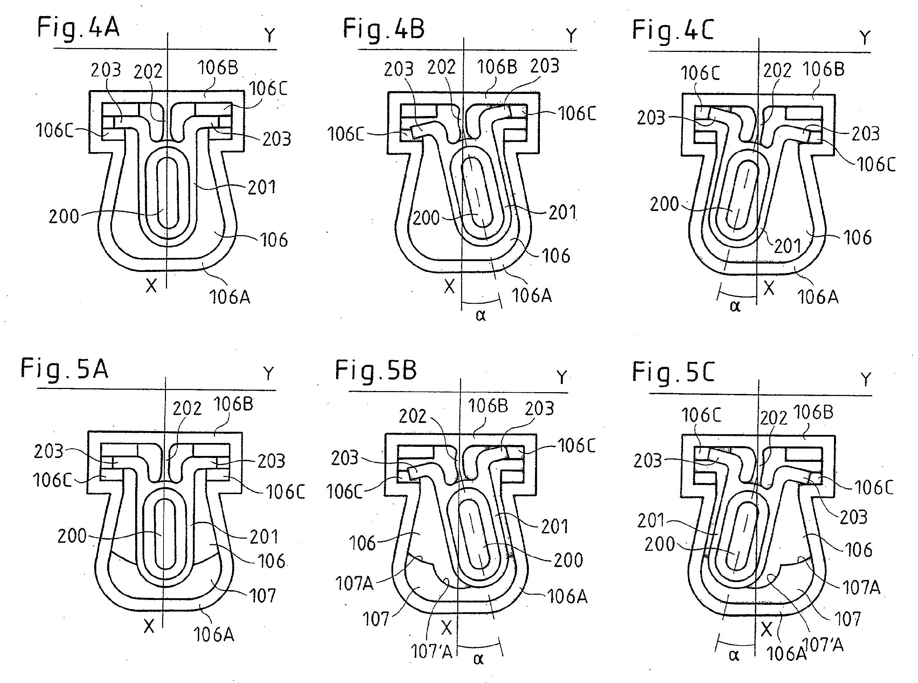

Avantageusement, chaque trou 200 appartient à un plot 201 rattaché à ladite platine 100 du boîtier par une liaison souple 202 autorisant un léger décalage dudit trou 200 parallèlement au plan P de la platine 100 selon une direction Y perpendiculaire à ladite direction X par rapport à une position d'origine stable représentée plus particulièrement sur les figures 4A et 5A.

Comme le montrent les figures 4B, 4C, 5B et 5C, ledit décalage de chaque trou 200 est réalisé par pivotement de la liaison souple 202 dans le plan P (plan XY) de ladite platine 100.

Chaque liaison souple 202 rattachant un plot 201 à la platine 100 est ici constituée par une languette flexible qui s'étend perpendiculairement au bord 101A ou 101B de la platine 100.

Chaque plot 201 vient de formation avec ladite liaison souple 202 associée qui vient elle-même de formation par moulage d'une matière plastique avec ladite platine 100.

Plus particulièrement, chaque plot 201 se trouve placé à une extrémité libre de ladite languette flexible constituant la liaison souple 202, en s'étendant vers l'intérieur de la platine 100.

Pour ce faire, chaque plot 201 pourvu d'un trou 200 s'étend librement dans une ouverture 106 prévue dans la platine 100 en étant rattaché par ladite liaison souple 202 à un bord 106B de ladite ouverture 106.

Ici, chaque ouverture 106 présente une forme globalement en Ω, le bord 106B de ladite ouverture 106, auquel est rattaché le plot 201 par ladite liaison souple 202, étant parallèle au bord 101A ou 101B de la platine 100.

En outre, comme le montrent plus particulièrement les figures 1, 4A à 4C et 5A à 5C, chaque plot 201 porte, de part et d'autre de la liaison souple 202, des butées 203 qui s'étendent selon la direction générale Y dans la partie rectangulaire de l'ouverture 106. Les butées 203 viennent de formation avec chaque plot 201 par moulage d'une matière plastique.

Ces butées 203 sont aptes à venir en appui contre une partie 106C de la platine 100 du boîtier, pour plaquer la platine contre la paroi.

Comme le montrent les figures 4B, 4C et 5B, 5C, le débattement α angulaire de chaque plot 201 est d'environ de 6 degrés de part et d'autre de la direction X.

Ce décalage est obtenu par fléchissement de chaque languette flexible constituant la liaison souple 202 entre la platine 100 et le plot 201 correspondant portant le trou 200.

En outre, selon le mode de réalisation représenté sur les figures 1 et 3 ainsi que sur les figures 5A, 5B et 5C, il est prévu, pour chaque plot 201, une paroi mince 107 qui s'étend à partir d'un bord 106A de ladite ouverture 106 opposé à celui 106B auquel est rattaché ledit plot 201 par ladite liaison souple 202, en dessous dudit plot 201 de façon à obturer une partie de ladite ouverture 106.

Chaque paroi mince 107 présente un bord libre 107A découpé en arrondi avec une encoche centrale 107'A accueillant une extrémité d'un plot 201 portant un trou 200.

Cette encoche centrale 107'A est principalement là pour des questions de démoulage de la pièce unique constituant la platine 100 portant les plots 201.

Le bord libre 107A de la paroi mince 107 est découpé de telle sorte que lorsque ledit plot 201 est décalé par rapport à sa position d'origine stable (voir figures 5B et 5C) il prend appui sur la paroi mince 107 pour la plaquer contre la paroi de fixation du boîtier.

Ainsi, comme le montrent les figures 4A à 4C et 5A à 5C, chaque trou 200 de la platine 100 du boîtier peut prendre une position ajustée en fonction de la position du trou de perçage réalisé dans la paroi de fixation du boîtier pour venir en correspondance avec ce trou de perçage

On obtient alors, par le décalage du trou 200 par rapport à sa position d'origine stable représentée sur les figures 4A et 5A, un degré de liberté supplémentaire selon la direction Y à celui donné par l'allongement du trou 200 selon la direction X.

Dans la configuration où chaque trou 200 est décalé par rapport à la position d'origine stable représentée sur les figures 4A et 5A, par exemple une position décalée vers la gauche ou vers la droite représentée sur les figures 4B, 4C et 5B, 5C, l'organe de fixation engagé au travers du trou 200 et ancré dans la paroi, par exemple un organe de vissage, permet de bloquer le plot 201 en position, les butées 203 venant en appui contre les parties 106C de la platine.

En outre, selon les modes de réalisation représentés sur les figures 5B et 5C, lorsque le plot 201 prend une position décalée par rapport à l'axe X, son extrémité libre, située à l'opposé des butées 203, prend appui sur la paroi mince 107 en la plaquant contre la paroi de fixation.

La présente invention n'est nullement limitée aux modes de réalisation décrits et représentés, mais l'homme du métier saura y apporter toute variante conforme aux revendications. En particulier, on pourra prévoir, selon une variante non représentée, que le fond du boîtier vient de formation avec ses parois latérales en formant une pièce unique. Dans ce cas, le couvercle de fermeture est essentiellement plat et s'adapte sur les bords supérieurs desdites parois latérales s'élevant perpendiculairement au fond.

## Revendications

1. Boîtier pour appareillage électrique comprenant un fond (100) pourvu d'au moins un trou (200) de forme allongée selon une direction X pour la fixation dudit boîtier à une paroi, **caractérisé en ce que** ledit trou (200) appartient à un plot (201) rattaché audit fond (100) par une liaison souple (202) autorisant un léger décalage dudit trou (200) parallèlement au plan (P) du fond (100) selon une direction Y perpendiculaire à ladite direction X par rapport à une position d'origine stable.

2. Boîtier selon la revendication 1, **caractérisé en ce que** ledit décalage de chaque trou (200) est réalisé par pivotement de la liaison souple (202) dans le plan (P) du fond (100).

3. Boîtier selon l'une des revendications 1 ou 2, **caractérisé en ce que** chaque plot (201) pourvu d'un trou (200) s'étend librement dans une ouverture (106) prévue dans ledit fond (100), en étant rattaché par ladite liaison souple (202) à un bord (106B) de ladite ouverture (106).

4. Boîtier selon la revendication 3, **caractérisé en ce que**, pour chaque plot (201), il est prévu une paroi mince (107) qui s'étend à partir d'un bord (106A) de ladite ouverture (106) opposé à celui (106B) auquel est rattaché ledit plot (201) par ladite liaison souple (202), en dessous dudit plot (201) de façon à obturer une partie de ladite ouverture (106), cette paroi mince (107) présentant un bord libre (107A) découpé de telle sorte que lorsque ledit plot (201) est décalé par rapport à sa position d'origine stable il prend appui sur ladite paroi mince (107) pour la plaquer contre la paroi de fixation du boîtier.

5. Boîtier selon l'une des revendications 1 à 4, **caractérisé en ce que** chaque plot (201) porte, de part et d'autre de ladite liaison souple (202), des butées (203) aptes à venir en appui contre une partie (106C) dudit fond (100) pour plaquer ledit fond contre la paroi.

6. Boîtier selon l'une des revendications 1 à 5, **caractérisé en ce que** chaque plot (201) vient de formation avec ladite liaison souple (202) associée.

7. Boîtier selon l'une des revendications 1 à 6, **caractérisé en ce que** chaque liaison souple (202) est constituée par une languette flexible qui s'étend selon ladite direction X de chaque trou, perpendiculairement à un bord (101A), 101B) dudit fond (100).

8. Boîtier selon la revendication 7, **caractérisé en ce que** chaque languette flexible (202) vient de formation par moulage d'une matière plastique avec ledit fond (100).

9. Boîtier selon l'une des revendications précédentes, **caractérisé en ce que** chaque trou (200) présente une forme oblongue.

## Patentansprüche

1. Dose für ein elektrisches Installationsgerät mit einem Boden (100), der zur Befestigung der Dose an einer Wand mit wenigstens einem in einer Richtung X länglich verlaufenden Loch (200) versehen ist,
**dadurch gekennzeichnet, dass** das Loch (200) zu einer mit dem Boden (100) durch eine elastische Verbindung (202) verbundenen Buchse (201) gehört, welche ein leichtes Verschieben des Lochs (200) parallel zur Ebene (P) des Bodens (100) in einer Richtung Y senkrecht zur Richtung X bezüglich einer stabilen Ausgangsposition zulässt.

2. Dose nach Anspruch 1,
**dadurch gekennzeichnet, dass** das Verschieben eines jeden Lochs (200) durch Schwenken der elastischen Verbindung (202) in der Ebene (P) des Bodens (100) erfolgt.

3. Dose nach einem der Ansprüche 1 oder 2,
**dadurch gekennzeichnet, dass** sich jede mit einem Loch (200) versehene Buchse (201) ungehindert in einer im Boden (100) vorgesehenen Öffnung (106) erstreckt, wobei sie durch die elastische Verbindung (202) mit einem Rand (106B) der Öffnung (106) verbunden ist.

4. Dose nach Anspruch 3,
**dadurch gekennzeichnet, dass** für jede Buchse (201) eine schmale Wand (107) vorgesehen ist, die sich von einem Rand (106A) der Öffnung (106) ausgehend, der dem durch die elastische Verbindung (202) mit der Buchse (201) verbundenen Rand (106B) entgegengesetzt ist, unterhalb der Buchse (201) solchermaßen erstreckt, dass ein Teil der Öffnung (106) verschlossen wird, wobei die schmale Wand (107) einen freien Rand (107A) aufweist, der so zugeschnitten ist, dass beim Verschieben der Buchse (201) bezüglich ihrer stabilen Ausgangsposition diese auf der schmalen Wand (107) aufliegt, um diese zur Befestigung der Dose an die Wand zu drücken.

5. Dose nach einem der Ansprüche 1 bis 4,
**dadurch gekennzeichnet, dass** jede Buchse (201) beidseits der elastischen Verbindung (202) mit Anschlägen (203) versehen ist, die gegen einen Teil (106C) des Bodens (100) zur Anlage gelangen können, um den Boden gegen die Wand zu drücken.

6. Dose nach einem der Ansprüche 1 bis 5,
**dadurch gekennzeichnet, dass** jede Buchse (201) einstückig mit der zugehörigen elastischen Verbindung (202) gebildet ist.

7. Dose nach einem der Ansprüche 1 bis 6,
**dadurch gekennzeichnet, dass** jede elastische Verbindung (202) durch eine flexible Zunge gebildet ist, die sich in der Richtung X eines jeden Lochs senkrecht zu einem Rand (101A, 101B) des Bodens (100) erstreckt.

8. Dose nach Anspruch 7,
**dadurch gekennzeichnet, dass** jede flexible Zunge (202) durch Formguss eines Kunststoffs mit dem Boden (100) einstückig gebildet ist.

9. Dose nach einem der vorhergehenden Ansprüche,
**dadurch gekennzeichnet, dass** jedes Loch (200) eine längliche Form hat.

## Claims

1. An electrical equipment box including a back (100) incorporating at least one hole (200) of elongate shape in a direction X for fixing the said box to a wall, **characterized in that** said hole (200) is in a stud (201) attached to said back (100) by a flexible connection (202) allowing a small offset of said hole (200) relative to a stable original position in a direction Y parallel to the plane (P) of the back (100) and perpendicular to said direction X.

2. The box according to claim 1, **characterized in that** said offset of each hole (200) is obtained by pivoting its flexible connection (202) in plane (P) of the back (100).

3. The box according to one of claims 1 or 2, **characterized in that** each stud (201) provided with a hole (200) lies freely in an opening (106) in said back (100) and is attached by said flexible connection (202) to one edge (106B) of said opening (106).

4. The box according to claim 3, **characterized in that** a thin wall (107) is provided for each stud (201) and extends from an edge (106A) of said opening (106) opposite that (106B) to which said stud (201) is attached by said flexible connection (202), and under said stud (201), so as to close off a portion of said opening (106), said thin wall (107) having a free edge (107A) shaped so that when said stud (201) is offset relative to its stable original position it bears on said thin wall (107) to press it against the wall to which the box is to be fixed.

5. The box according to one of claims 1 to 4, **characterized in that** each stud (201) carries, on respective opposite sides of said flexible connection (202), abutments (203) adapted to bear against a portion (106C) of said back (100) to press said back against the wall.

6. The box according to one of claims 1 to 5, **characterized in that** each stud (201) is formed in one piece with said flexible connection (202) associated therewith.

7. The box according to one of claims 1 to 6, **characterized in that** each flexible connection (202) consists of a flexible tongue that extends in said direction X of each hole and perpendicularly to an edge (101A), (101B) of said back (100).

8. The box claimed according to claim 7, **characterized in that** each flexible tongue (202) is molded in one piece with said back (100) from a plastics material.

9. The box according to one of claims 1 to 8, **characterized in that** each hole (200) has an oblong shape.
